(19) **Europäisches Patentamt**
**European Patent Office**
**Office européen des brevets**

(11) **EP 2 320 401 B1**

(12) **FASCICULE DE BREVET EUROPEEN**

(45) Date de publication et mention
de la délivrance du brevet:
**09.05.2012 Bulletin 2012/19**

(51) Int Cl.:
*G08C 17/02* (2006.01)    *H04L 12/28* (2006.01)

(21) Numéro de dépôt: **10190195.7**

(22) Date de dépôt: **05.11.2010**

(54) **Communication d'ordres dans un réseau domotique et entre réseaux domotiques**

Befehlsübermittlung in einem Heimnetz bzw. zwischen Heimnetzen

Communication of orders within a home-automation network and between home-automation networks

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.11.2009 FR 0957886**

(43) Date de publication de la demande:
**11.05.2011 Bulletin 2011/19**

(73) Titulaire: **Somfy SAS**
**74300 Cluses (FR)**

(72) Inventeurs:
• **Mignot, Pierre**
**05380, Chateauroux les Alpes (FR)**

• **Pellarin, Florent**
**74370, Saint Martin Bellevue (FR)**

(74) Mandataire: **Bugnion Genève**
**Bugnion S.A.**
**Conseils en Propriété Industrielle**
**Route de Florissant 10**
**Case Postale 375**
**1211 Genève 12 (CH)**

(56) Documents cités:
**WO-A2-01/78307    US-A1- 2004 138 786**

EP 2 320 401 B1

**Description**

L'invention concerne un procédé de communication d'informations et de commandes sur un réseau domotique. L'invention concerne également les dispositifs permettant ou utilisant le procédé de communication et une installation munie de tels dispositifs.

Une installation domotique comprend au moins deux équipements dans un bâtiment, qui peuvent communiquer entre eux par des signaux de type radiofréquences ou courants porteurs. Ces équipements peuvent être des contrôleurs, des automatismes de commande, des organes de commande munis d'interface homme-machine, des capteurs de présence, capteurs météorologiques, de qualité de l'air etc., des actionneurs raccordés à des équipements mobiles ou fixes tels que des portes ou portails, volets d'aération, protections solaires, radiateurs de chauffage, climatiseurs, sirènes d'alarme, etc. Les équipements peuvent également comprendre des appareils domestiques de l'habitat (par exemple électroménager ou Hi-Fi).

A l'installation domotique est associé un réseau domotique et un protocole de communication, définissant selon un modèle normalisé en plusieurs couches les modalités physiques et logiques de transmission de l'information dans l'installation domotique.

Au niveau le plus élevé, les équipements sont généralement définis par des profils, explicitant l'ensemble des commandes ou informations issues de l'équipement ou reconnues par celui-ci.

Chaque équipement est identifié par un code d'identification, également appelé identifiant ou adresse de l'équipement dans l'installation.

Un tel protocole de communication est par exemple divulgué dans le brevet WO 01/78307.

De nombreux protocoles de communication ont été développés dans ce domaine mais sont incompatibles les uns avec les autres, même lorsqu'ils opèrent sur des fréquences de communication identiques, notamment du fait de structures différentes des trames (bas-niveau) mais aussi des sémantiques (haut-niveau) utilisées dans les couches applicatives. De plus, au sein d'un même protocole, la structure de la trame bas-niveau est décorrélée du message (l'instruction) tel qu'exprimé en langage de programmation. Il s'ensuit une complexité qui pèse dans les temps de développement et dans les risques d'erreur.

Il est connu d'adapter la longueur de trame et/ou son contenu à la nature d'une instruction contenue dans la trame, selon plusieurs formats. Ce type d'adaptation est comparable par exemple à la codification des instructions d'un microprocesseur en langage assembleur : le nombre d'octets de l'instruction dépend de la nature de l'instruction (exécutable sans paramètre, exécutable avec un paramètre, avec deux paramètres...), du mode d'adressage utilisé (sans adresse, adressage relatif, adressage étendu...) etc.

Le brevet US 7,304,950 décrit une structure de trame variable selon la nature de l'opération codée dans la trame. Par exemple, un code opération 001 décrit une opération d'écriture, utilisant un champ étendu, avec test de redondance cyclique (CRC) et accusé de réception. Un code opération 010 décrit la même opération mais sans champ étendu, sans CRC et sans accusé de réception. Il n'y a pas de lien logique dans le codage entre le code de l'opération et le code de présence de CRC ou d'accusé de réception.

L'invention permet de remédier à ces divers inconvénients en proposant un niveau d'abstraction plus important que celui des protocoles actuels, et donc apte à les fédérer dans un langage commun ou à faciliter la communication dans des passerelles entre protocoles, facilement compréhensible par l'homme, notamment le programmeur, tout en étant beaucoup plus proche de la machine. La mise en oeuvre de l'invention nécessite un codage particulier de segments fonctionnels constitutifs de la trame.

L'invention prend donc tout son sens dans le cadre d'une première programmation d'une installation domotique, en simplifiant la tâche de l'installateur. Elle est également applicable très avantageusement au sein d'une ou de plusieurs installations domotiques, dans la ou lesquelles elle offre une simplification de l'interfaçage avec l'utilisateur et une passerelle entre les installations domotiques.

L'invention permet également une optimisation du fonctionnement d'un réseau domotique accessible sous forme de « web-services », dans lesquels des instructions sont communiquées sous forme de pages au format de type XML, en offrant une réduction très significative de la longueur des trames transmises sur le réseau domotique.

Selon l'invention, le procédé de communication dans un réseau domotique permettant la communication entre acteurs constitués par des émetteurs d'ordres et/ou récepteurs d'ordres associés à des équipements dans un bâtiment au moyen de messages transmis sous forme de trames comprenant une pluralité de segments fonctionnels, comprend une étape de construction de la trame à partir d'une instruction écrite dans un langage de programmation, l'instruction comprenant des mots composés sous forme de chaînes de caractères alphanumériques et/ou signes, délimités par des séparateurs, dans laquelle chaque caractère alphanumérique et/ou signe de l'instruction est séparément converti en valeur binaire, la concaténation des valeurs binaires converties d'un mot formant un segment fonctionnel de la trame.

Selon l'invention, le procédé de communication peut comprendre une étape de construction d'une instruction à partir d'une trame dans laquelle des valeurs binaires successives de la trame sont converties en caractères alphanumériques et/ou signes, au cours de laquelle un séparateur peut-être inséré entre deux chaînes de caractères alphanumériques et/ou de signes.

Selon l'invention, une valeur binaire convertie peut être le code ASCII du caractère alphanumérique et/ou du signe.

Selon l'invention, lesdits séparateurs peuvent être des espaces.

Selon l'invention, au moins un desdits segments fonctionnels peut être un segment fonctionnel particulier et ledit segment fonctionnel particulier peut spécifier un type d'échange ou un type d'action.

Selon l'invention, ledit segment fonctionnel particulier peut être formé à partir d'une chaîne ne comprenant que des signes.

Selon l'invention, un desdits signes peut présenter une signification différente s'il spécifie un type d'échange ou s'il spécifie un type d'action.

Selon l'invention, un premier type d'échange peut être un échange de type descendant, si le message est transmis depuis un émetteur d'ordres vers un récepteur d'ordres, et un deuxième type d'échange peut être un échange de type montant si le message est transmis depuis un récepteur d'ordres vers un émetteur d'ordres. Selon l'invention, un type d'échange peut inclure une demande d'acquittement ou une réponse à une demande d'acquittement.

Selon l'invention, les types d'action peuvent comprendre une action d'affectation et/ou une action de contrainte et/ou une action d'interrogation.

Selon l'invention, dans une trame, lesdits segments fonctionnels particuliers peuvent porter sur un acteur et/ou sur un paramètre, notamment une position ou une vitesse de mouvement d'un équipement et/ou sur une condition logique, basée notamment sur une valeur mesurée d'un paramètre mesurable par un capteur, et/ou sur une valeur de paramètre, chacun étant affecté dans des segments fonctionnels distincts de ladite trame.

Selon l'invention, le dispositif de traduction pour la programmation d'une installation domotique, ladite installation comprenant des émetteurs d'ordres et/ou des récepteurs d'ordres associés à des équipements dans un bâtiment, lesdits émetteurs d'ordres et/ou récepteurs d'ordres communiquant entre eux par l'intermédiaire de trames comprenant un champ de données incluant plusieurs segments fonctionnels, comprend des moyens pour traduire en une trame une instruction écrite dans un langage de programmation comprenant des mots composés de chaînes de caractères alphanumériques et/ou signes, et comprend également des moyens pour composer chaque segment fonctionnel à partir d'un mot par une traduction en binaire de chaque caractère alphanumérique et/ou signe du mot.

Selon l'invention, le dispositif domotique de type émetteur d'ordres et/ou récepteur d'ordres et/ou outil de programmation d'une installation domotique, comprend des moyens d'analyse de trame et des moyens de communication aptes à émettre et à recevoir des trames, lesdites trames comprenant au moins un champ de données comprenant une pluralité de segments fonctionnels, et les moyens d'analyse de trame comprennent une mémoire de trame permettant de stocker une trame, une pluralité de tables, un comparateur, apte à reconnaître dans ledit champ de données un ou plusieurs signes de séparation, dont les codes sont stockés dans une première table, et comprennent une deuxième table de pointeurs stockant la position desdits segments fonctionnels d'une trame stockée dans ladite mémoire de trames à partir de la position desdits signes de séparation, afin de mettre en oeuvre le procédé de communication tel que décrit ci-dessus.

Selon l'invention, l'installation domotique comprend au moins un dispositif de traduction tel que décrit ci-dessus ou au moins un dispositif domotique tel que décrit ci-dessus.

Selon l'invention, l'installation domotique peut comprend un dispositif de surveillance du réseau muni d'un programme de substitution apte à provoquer le remplacement d'un identifiant long ou d'un alias long par un identifiant court ou un alias court.

L'invention sera mieux comprise par l'homme du métier grâce à la description détaillée de différents modes d'exécution en relation avec les dessins accompagnants, dans lesquels :

La figure 1 représente une installation domotique comprenant plusieurs dispositifs domotiques utilisant le procédé de communication de l'invention pour communiquer.

La figure 2 représente schématiquement un dispositif de traduction selon l'invention.

La figure 3 représente, selon l'invention, la structure d'une trame de communication et/ou d'une instruction dans le langage de programmation.

La figure 4 représente deux types d'échanges, distingués dans l'invention.

La figure 5 représente différents signes utilisés dans le langage de programmation et leur signification.

La figure 6 représente un premier exemple de trame et/ou d'instruction.

La figure 7 représente un deuxième exemple de trame et/ou d'instruction.

La figure 8 représente trois exemples de trames et/ou d'instructions relatifs à une même séquence.

La figure 9 représente un sixième exemple de trame et/ou d'instruction.

La figure 10 représente un septième exemple de trame et/ou d'instruction.

La figure 11 représente une séquence de trames et/ou d'instructions relatives à un procédé de détection de vent.

La figure 12 représente en hexadécimal un exemple de trame émise sur le réseau domotique.

La figure 13 représente un dispositif domotique muni de moyens aptes à appliquer le procédé de communication selon l'invention.

La figure 14 représente un réseau d'installation comprenant un dispositif domotique muni de moyens aptes à appliquer le procédé de communication selon l'invention.

La figure 15 représente un procédé de substitution d'alias selon l'invention.

Les figures 15A et 15B représentent schématiquement deux exemples d'application de l'invention au modèle de communication OSI en 7 couches.

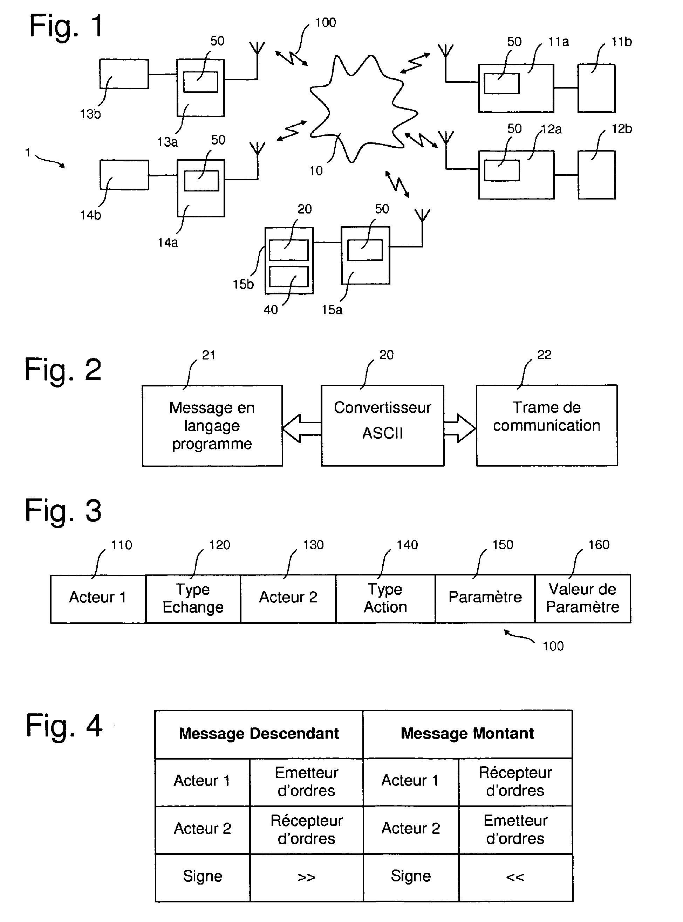

La figure 1 représente une installation domotique 1 comprenant plusieurs dispositifs domotiques communiquant à l'aide d'un réseau domotique 10.

Ces dispositifs domotiques consistent en des émetteurs d'ordres ou des récepteurs d'ordres, associés à des équipements d'un bâtiment ou utilisés pour le pilotage de tels équipements.

Ainsi, un premier récepteur d'ordres 11a est raccordé à un premier équipement 11b, par exemple un actionneur d'écran mobile tel un volet roulant ou une protection solaire.

Un deuxième récepteur d'ordres 12a est raccordé à un deuxième équipement 12b, par exemple un actionneur d'éclairage, de chauffage ou de climatisation.

Un premier émetteur d'ordres 13a est raccordé à un troisième équipement 13b, par exemple un contrôleur comprenant un clavier de commande et un écran d'affichage contenu dans un boîtier de commande à distance, formant ainsi une télécommande. Un deuxième émetteur d'ordres 14a est raccordé à un quatrième équipement 14b, par exemple un capteur de température intérieure ou extérieure, un capteur de présence, un capteur d'ensoleillement ou un capteur de vent.

Un troisième émetteur d'ordres 15a est raccordé à un outil de programmation 15b, destiné à communiquer avec les différents équipements du réseau. Cet outil peut par exemple être, comme le troisième équipement, un contrôleur évolué, mais il peut également être constitué par un ordinateur(PDA, PC, etc.).

Les émetteurs d'ordres et/ou les récepteurs d'ordres communiquent entre eux à l'aide d'un réseau domotique 10 utilisant par exemple un support physique de type hertzien (radiofréquences) comme représenté sur la figure par le symbole d'antennes, ou de type filaire direct, ou encore de type courants porteurs de ligne (PLC). Le réseau domotique peut également combiner les différents types de support physique dans le cas d'un réseau hétérogène.

Les messages (ou « télégrammes ») sont transmis sous forme de signaux comprenant des trames 100 émises ou reçues. Le réseau domotique selon l'invention utilise un protocole de communication, spécifiant, notamment, le processus de transformation des trames en signaux transmis sur le réseau domotique.

La communication entre éléments est bidirectionnelle. Le terme « émetteur d'ordres » ou « récepteur d'ordres » désigne par convention le sens principal de communication de commandes ou de données entre les différents dispositifs. Alternativement, certains dispositifs sont unidirectionnels, comme des télécommandes locales, de portée réduite. Un dispositif associé à un capteur est assimilé à un émetteur d'ordres. Un tel dispositif peut n'émettre que des informations. Emetteurs d'ordres et récepteurs d'ordres sont des « acteurs » dans le procédé de communication. Chaque acteur est identifié par un identifiant qui lui est propre, par exemple une adresse dans le réseau domotique.

Chaque équipement muni d'une interface homme-machine (même simple ou guidée : clavier, écran) peut permettre la traduction d'une action humaine en un ordre de commande ou de programmation d'un équipement associé. Cette traduction implique une transformation de l'information en entrée (appui sur une touche du clavier, choix dans un menu d'écran) en une trame de commande ou de programmation compréhensible par l'équipement associé, selon le protocole de communication partagé.

En revanche, les étapes de programmation de l'installation sont généralement plus fastidieuses et nécessitent souvent du temps et/ou une bonne connaissance par l'installateur du fonctionnement des éléments de l'installation à programmer.

La figure 2 représente schématiquement un dispositif de traduction 20 selon l'invention. Un tel dispositif de traduction peut être intégré au niveau d'une télécommande ou d'un outil de programmation que possède un installateur. Il peut également faire partie d'un boîtier-relais, ou passerelle, assurant la communication entre deux installations domotiques distinctes. Ce dispositif de traduction permet la traduction d'une instruction ou d'un message, depuis un langage de programmation utilisé par un programmeur humain, en une trame de communication apte à assurer le fonctionnement des dispositifs domotiques. Réciproquement, le dispositif de traduction peut également être apte à réaliser la traduction inverse. Comme on le verra par la suite, l'invention ne se limite pas au dispositif et au processus de traduction, et permet la communication directe entre équipements à l'aide de trames définies selon l'invention.

Dans un langage de programmation de type textuel, le message formant l'instruction se présente sous la forme de mots composés d'une chaîne de caractères alphanumériques et/ou signes et délimités par des séparateurs. L'instruction est lisible et compréhensible par l'homme, elle correspond donc à un langage de programmation qu'on peut appeler textuel.

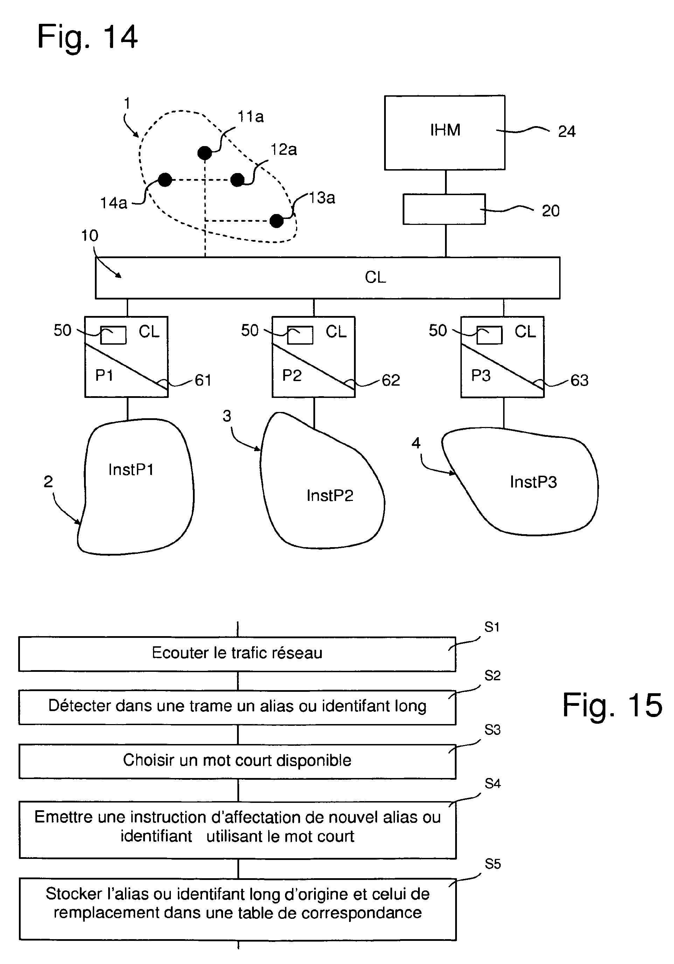

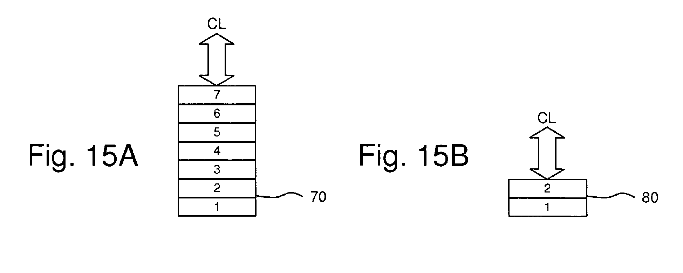

Le dispositif de traduction assure ainsi que l'instruction ou le message 21 est transformé en une trame 22, compréhensible par la machine ou inversement. La trame comprend un champ de données, lequel comprend plusieurs segments fonctionnels résultant de l'instruction. La trame est transformée selon le protocole de communication compréhensible par l'équipement domotique auquel elle est destinée. Il est connu d'ajouter un préambule et des champs de contrôle à la trame, mais il n'en est pas tenu compte ici, et de même pour les possibles opérations de cryptage. Ces points seront précisés en relation avec les figures 15A et 15B.

Selon l'invention, le champ de données de la trame est la transcription binaire directe de l'instruction, celle-ci étant sous forme de langage de programmation. Préférentiellement, cette transcription binaire utilise le code ASCII pour traduire chaque caractère alphanumérique ou chaque signe contenu dans l'instruction.

La figure 3 représente, la structure du champ de données d'une trame 100 de communication et/ou d'une instruction dans le langage de programmation. Cette structure est la même que l'on considère les éléments avant ou après traduction. Ainsi, les segments fonctionnels de la trame correspondent aux mots de l'instruction dont elle est traduite. Cette notation (mots, segments fonctionnels) est utilisée dans la suite de la description indifféremment pour une trame ou une instruction.

Que ce soit donc en langage de programmation ou sous forme de code machine (binaire), l'instruction et/ou la trame correspondante comprennent au moins :

- Un premier segment fonctionnel d'identification 110 d'un premier acteur Acteur1,
- Un segment fonctionnel de type d'échange 120,
- Un deuxième segment fonctionnel d'identification 130 d'un deuxième acteur Acteur2,
- Un segment fonctionnel de type d'action 140,
- Un segment fonctionnel de paramètre 150,
- Un segment fonctionnel de valeur de paramètre 160.

Comme il sera vu plus loin, les mots ou segments fonctionnels peuvent être répétés plusieurs fois, avec des contenus différents, dans le cas d'instructions complexes. Comme il sera vu ci-dessous, un segment fonctionnel de valeur de paramètre peut aussi contenir une condition logique portant sur le paramètre. Une instruction peut ainsi comprendre autant de mots que souhaités. En particulier, la trame reproduisant l'instruction peut comprendre plus que deux segments fonctionnels identifiant des acteurs, et peut comprendre plus d'un segment fonctionnel de type d'action. Ces différents segments fonctionnels ne sont pas positionnés a priori dans la trame : leur position résulte du contenu de l'instruction.

La figure 4 représente deux types d'échanges, distingués dans l'invention.

Dans un message de type descendant, le premier acteur est un émetteur d'ordres et le deuxième acteur est un récepteur d'ordres. Le segment fonctionnel de type d'échange indique sans ambiguïté le sens de l'échange, depuis l'émetteur d'ordres vers le récepteur d'ordres. Selon l'invention, les acteurs sont préférentiellement identifiés dans le langage de programmation par des chaînes alphanumériques : par exemple, Télécommande2, ThermostatSéjour, VoletRoulant3, alors que le type d'échange est préférentiellement identifié par une chaîne de signes (ou au moins par une sélection des signes particuliers) de la police de caractères accessible sur le clavier d'un outil de programmation. La chaîne de signes comprend un ou plusieurs signes, aussi représentatifs que possible pour le lecteur humain.

Ainsi, le type d'échange correspondant à un message descendant est représenté par les signes >>, tandis que le type d'échange correspondant à un message montant est représenté par les signes « .

Cependant, la personne écrivant le programme est libre d'inverser la position des acteurs dans son instruction à condition d'inverser également le signe de type d'échange.

L'invention n'oblige pas à toujours considérer un émetteur d'ordres comme premier acteur et un récepteur d'ordres comme deuxième acteur, puisque le type d'échange indique sans ambiguïté les rôles respectifs au cours de l'échange. C'est cependant le mode de réalisation préféré.

Dans le cas d'échanges entre émetteurs d'ordres et s'il existe une relation hiérarchique entre ceux-ci, on utilisera préférentiellement l'émetteur d'ordres de rang hiérarchique plus élevé comme premier acteur. Il s'agit bien dans les deux cas d'habitudes de programmation laissées à l'appréciation du programmeur.

De même, l'invention n'oblige pas à spécifier le type d'échange si une convention est prise dans le langage de programmation : par exemple toujours considérer l'émetteur du message en cours comme premier acteur et le destinataire du message comme deuxième acteur. Cependant, il apparaîtra clairement à la lecture des exemples qui suivent qu'il y a intérêt à permettre cette spécification du type d'échange.

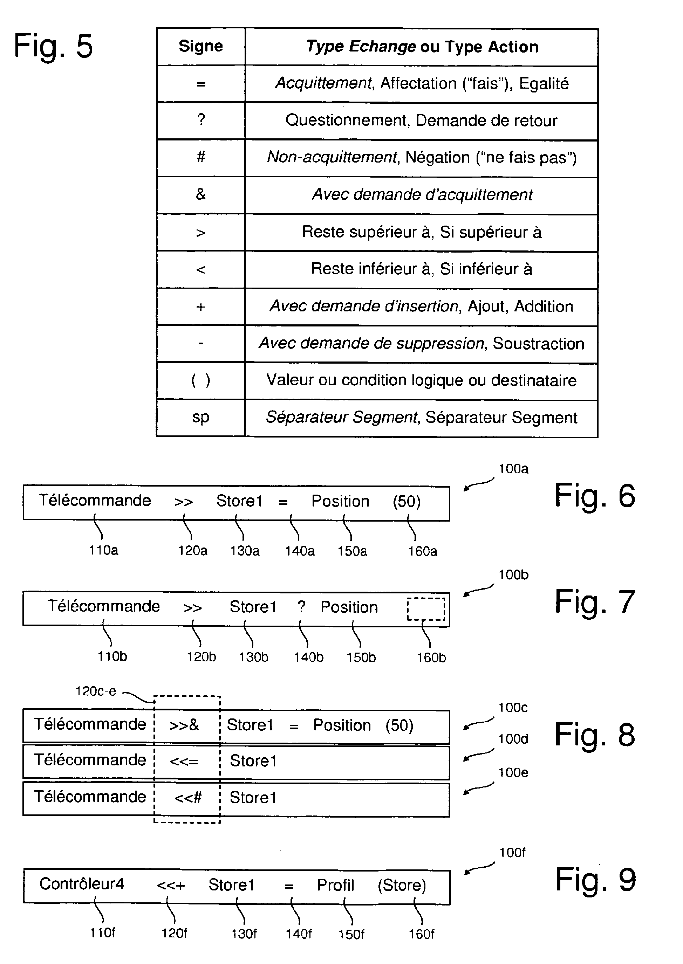

La figure 5 représente une table d'autres signes utilisés dans le langage de programmation et leur signification.

Ces signes sont utilisés dans les segments fonctionnels particuliers de type d'échange 120 et de type d'action 140, et constituent à eux seuls ou en association à d'autres signes, le contenu de ces segments fonctionnels particuliers. Certains signes peuvent aussi être utilisés en début de segments fonctionnels de valeurs de paramètre.

Ainsi, le signe « = » a le sens classique d'affectation ou de contrainte d'égalité à respecter s'il est présent dans le segment fonctionnel de type d'action, tandis qu'il a le sens d'acquittement s'il est présent dans le segment fonctionnel de type d'échange. Le signe « = » a le sens de condition logique s'il est placé dans un segment de valeur de paramètre.

Inversement, le signe « # » a le sens de « ne fais pas » s'il est présent dans le segment fonctionnel de type d'action alors qu'il a le sens de non-acquittement s'il est présent dans le segment fonctionnel de type d'échange. Il a le signe de « différent de » dans un segment fonctionnel de valeur de paramètre, représentant une condition logique.

Le signe « ? » a le sens de questionnement quand il est présent dans le segment fonctionnel de type d'action.

Le signe « & » a le sens d'une demande d'acquittement quand il est présent dans le segment fonctionnel de type d'échange. L'acquittement positif signifie que le message est bien reçu et sera traité.

Les signes « > » et « < » ont le sens de contrainte d'inégalité à respecter quand ils sont présents dans le segment fonctionnel de type d'action ou le sens de conditions logiques « si plus grand que » ou « si plus petit que » quand ils sont présents dans un segment de valeur de paramètre.

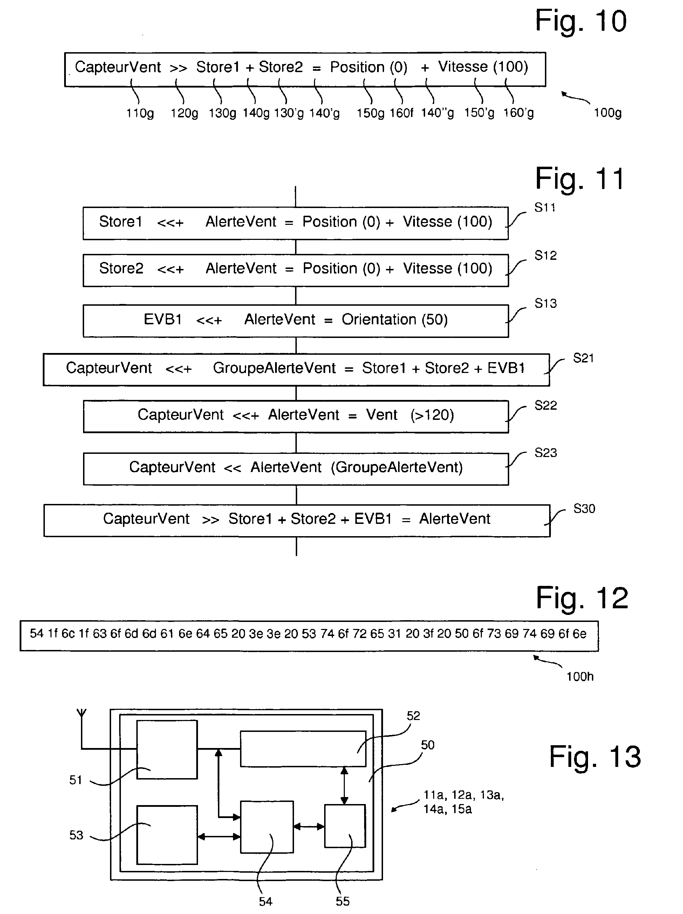

Le signe « + » correspond à une demande d'insertion (ou de concaténation ou d'enchaînement) lorsqu'il est inclus dans le type d'échange, ce qui sera décrit en relation avec la figure 9. Il a le sens classique d'ajout quand il est inclus dans un segment fonctionnel de type d'action, comme il sera décrit en relation avec la figure 10.

Le signe « - » correspond à une demande de suppression lorsqu'il est inclus dans le type d'échange, ce qui sera décrit en relation avec la figure 9.

Le signe ( ) permet d'identifier un segment de valeur de paramètre (ou de condition logique portant sur une valeur de paramètre) contenues à l'intérieur des parenthèses.

Le cas du signe « sp » sera décrit plus bas, en relation avec la figure 12.

La figure 6 représente un premier exemple de trame 100a et/ou d'instruction.

En langage de programmation, l'instruction se lit .

```
Télécommande >> Store1 = Position (50)
```

Les espaces séparent les différentes parties de l'instruction.

Les deux acteurs « *Télécommande* » et « *Store1* » sont clairement identifiés par des chaînes alphanumériques. Le message est de type descendant, depuis un émetteur d'ordres « *Télécommande* » vers un récepteur d'ordres « *Storel* ». L'action est une demande de positionnement comprenant une contrainte d'égalité, portant sur le paramètre « Position » qui doit prendre la valeur 50 (ou 50%, selon une interprétation fixée par le document Profil du store).

On retrouve cette même structure dans la trame en codage binaire.

La figure 7 représente un deuxième exemple de trame 100b et/ou d'instruction.

En langage de programmation, l'instruction se lit:

```
Télécommande >> Storel ? Position
```

Les deux acteurs « *Télécommande* » et « *Store1* » sont les mêmes que précédemment. Le message est de nouveau de type descendant. L'action est une interrogation portant sur le paramètre position.

La valeur de paramètre n'apparaît plus, ni dans l'instruction, ni dans la trame correspondante.

Une réponse à l'envoi de ce message serait par exemple, si *Store1* est dans une position complètement déployée (100%) :

```
Télécommande << Storel = Position (100)
```

La figure 8 représente trois autres exemples de trames et/ou d'instructions relatifs à une même séquence.

Dans un premier cas ou troisième exemple, l'instruction en langage de programmation se lit :

```
Télécommande >>& Storel = Position (50)
```

Il s'agit donc du même cas que dans la figure 6, mais cette fois le type d'échange s'accompagne d'une demande d'acquittement. Selon que *Store1* accepte ou non de prendre en compte l'ordre de positionnement à 50%, l'acquittement sera positif ou non.

Dans la trame correspondante, le segment type d'échange 120c contient donc un code représentatif de cette demande additionnelle d'acquittement.

Un deuxième cas ou quatrième exemple est celui d'une réponse par acquittement positif :

```
Télécommande <<= Store1
```

La trame 100d se limite donc aux trois premiers segments fonctionnels. Le deuxième segment fonctionnel 120d contient donc un code représentatif de l'acceptation de l'ordre.

Un troisième cas ou cinquième exemple est celui d'une réponse par acquittement négatif :

```
Télécommande <<# Store1
```

La trame 100e se limite de nouveau aux trois premiers segments fonctionnels. Le deuxième segment fonctionnel 120e contient donc un code représentatif du refus de l'ordre. Il est aussi possible d'adjoindre une information indiquant la cause du refus.

La figure 9 représente un sixième exemple de trame et/ou d'instruction.

En langage de programmation, l'instruction se lit :

```
Controleur4 <<+ Store1 = Profil (Store)
```

Il s'agit donc d'un message montant émis par *Store1* qui demande à être ajouté à la liste des identifiants connus de *Controleur4* et de lui affecter le profil générique *Store*.

Le profil générique *Store* indique à un émetteur d'ordres quelles sont les commandes reconnues par le dispositif domotique de type *Store*.

Inversement, une demande de retrait de cette liste s'écrit simplement :

```
Controleur4 <<- Store1
```

Du fait de la signification d'ajout du signe + dans un segment fonctionnel d'action, l'invention permet de combiner plusieurs actions dans un même message, par répétition des deux ou trois derniers segments fonctionnels de la trame. Par exemple, pour un ordre de repliement rapide d'un store suite à une détection de vent :

```
CapteurVent >> Store2 = Position (0) + Vitesse (Rapide)
```

De la même façon, il est possible de répéter plus que deux fois un segment fonctionnel d'acteur au sein de la trame. La figure 10 donne ainsi l'exemple d'une trame 100g combinant plusieurs acteurs destinataires et plusieurs actions à entreprendre.

En langage de programmation, le message s'écrit :

```
CapteurVent >> Store1 + Store2 = Position (0) +
                Vitesse (100)
```

Cette trame 100g comprend donc 3 segments fonctionnels désignant chacun un acteur et 3 segments fonctionnels désignant un type d'action : indiquant une action d'ajout pour deux d'entre eux (+) et une action de contrainte pour le troisième (=).

L'invention facilite aussi l'écriture et l'utilisation d'alias, par exemple, dans un premier temps lors de la configuration en langage de programmation :

```
ContrôleurCentral <<+ Stores = Store1 + Store2
```

Cette instruction ajoute dans la table des identifiants de *ContrôleurCentral* l'alias « Stores » pour représenter les identifiants de *Store1* et *Store2.*

A l'aide du signe -, il est possible d'exclure certains membres d'un groupe représenté par un alias pour l'exécution d'une instruction :

```
Télécommande >> GroupeStores - Store1 = Position (10)
```

 signifie par exemple que tous les membres du groupe défini par GroupeStores, à l'exception de Store1, devront se déployer à 10%.

La figure 11 représente à titre d'illustration une séquence de trames et/ou d'instructions relatives à un procédé de détection de vent.

Dans une première étape S11, un alias « *AlerteVent* » est affecté à *Store1,* avec pour action correspondante d'affecter la valeur 0 au paramètre Position et la valeur *100* au paramètre *Vitesse,* soit une action de repli à vitesse rapide.

Dans une deuxième étape S12, le même message d'affectation est envoyé à *Store2.* Dans une troisième étape S13, l'alias « *AlerteVent* » est aussi affecté à *EVB1,* mais cette fois le contenu est différent puisque la valeur 50 est affectée au paramètre *Orientation. EVB1* est par exemple un store à lames orientables (External Venetian Blind). En cas de vent, une mise à l'horizontale des lames (soit une orientation de 50 %) peut suffire à protéger l'équipement.

Dans une quatrième étape S21, l'alias « *GroupeAlerteVent* » est affecté à un capteur de vent désigné par *CapteurVent* en lui assignant comme valeur *Store1 + Store2 + EVB1.* Un groupe d'actionneurs est ainsi défini dans le capteur de vent.

Dans une cinquième étape S22, une condition d'alerte vent est créée. L'instruction s'écrit (de même que la trame correspondante) :

```
CapteurVent  <<+  AlerteVent  =  Vent  (>120)
```

Dans cette instruction, *Vent* est un attribut du capteur de vent, donc déjà connu de lui (et indiqué dans un profil du capteur de vent). La condition *AlerteVent* est remplie si le paramètre *Vent* (mesuré par le capteur) est supérieur à 120 km/h.

Dans une sixième étape S23, une valeur est affectée à l'alias *AlerteVent.* Dans le cas d'un alias d'événement comme *AlerteVent,* une valeur est un destinataire concerné par l'événement.

L'instruction s'écrit .

```
CapteurVent  <<  AlerteVent  (GroupeAlerteVent)
```

Les six premières étapes sont des étapes de configuration qui se déroulent dans un ordre quelconque et de manière totalement asynchrone, suite à programmation à l'aide d'un superviseur. Si maintenant le vent mesuré dépasse la valeur de 120 km/h, alors il y a émission d'un message par le capteur vent, tel que décrit par la septième étape S30 :

```
CapteurVent  >>  Store1  +  Store2  +  EVB1  =
                AlerteVent
```

Chacun des équipements *Store1, Store2* et *EVB1* détecte qu'il est destinataire du message, et appliquera l'action de repliement ou d'orientation correspondant à *AlerteVent.*
L'invention permet donc de simplifier grandement la programmation d'instructions, la traduction en trames de communication de longueur variable et l'interprétation des trames ou des instructions.
Les signes utilisés dans la description sont donnés à titre d'exemple non limitatif et peuvent donner lieu à de nombreuses variantes. Pour les raisons évoquées plus bas, il est préféré de n'utiliser que des signes dans les segments de type échange ou type action, mais ce n'est pas une obligation. Par exemple, le signe « = » peut être remplacé par la chaîne de caractères « set » lorsqu'il s'agit d'une affectation.
Le signe « espace » (noté « sp » pour représenter « ») est préférentiellement utilisé en séparateur dans le langage de programmation. En code ASCII, le signe espace a pour valeur 20 en hexadécimal, soit 0010 0000 en binaire. Ainsi, chaque fois que dans une trame binaire un récepteur reconnaît le code binaire 0010 0000, il peut déduire qu'on passe d'un segment fonctionnel au suivant.
La figure 12 représente ainsi le contenu du champ de données d'une trame à transmettre sur le réseau pour traduire le message :

```
Télécommande >> Store1 ? Position
```

En hexadécimal, ce contenu de trame s'écrit :

*54 1f 6c 1f 63 6f 6d 6d 61 6e 64 65 20 3e 3e 20 53 74 6f 72 65 31 20 3f 20 50 6f 73 69 74 69 6f 6e*

Chaque caractère alphanumérique et/ou signe de l'instruction est séparément converti en valeur binaire, et la concaténation des valeurs binaires converties d'une chaîne forme un segment fonctionnel de la trame.
Avantageusement, le code ASCII du « Retour chariot » (Carriage Return, CR ou RET) est utilisé comme code de fin de trame (ou au moins de fin du champ de données de la trame) et pourrait donc s'ajouter à la fin de la trame ci-dessus.
Bien que l'invention n'impose aucune limite, il est clair que le programmeur aura tout intérêt à éviter les chaînes de caractères trop importantes. Par exemple, le mot *Télécommande* sera avantageusement remplacé par *Téléco* dans le langage de programmation. De même, si la langue anglaise est utilisée comme langage de programmation, on remplacera avantageusement le mot *RemoteControl* par le mot *Remote,* ou *TemperatureSensor* par *TempSr,* de manière à réduire la longueur des trames.
De même on préférera dans le langage de programmation le signe » ou le signe « aux signes doubles » et «, pour permettre de gagner chaque fois un octet.
Selon une première variante du procédé, les séparateurs sont maintenus dans la trame émise.
Il faut cependant noter que les espaces *20 Hex* peuvent être avantageusement supprimés de la trame s'il est convenu que seuls un ou plusieurs signes sont utilisés dans les segments fonctionnels de type d'échange et de type d'action, que les segments fonctionnels d'acteurs ne contiennent pas de signes et que les segments fonctionnels de valeur de paramètre sont délimités par des signes comme des parenthèses *( )* ou des crochets *[ ].* En effet, la présence ou l'absence de signes permet alors d'identifier sans ambiguïté un changement de segment fonctionnel au sein de la trame. Dans une seconde variante du procédé, les codes des séparateurs sont donc éliminés avant émission de la trame.
Dans une opération de traduction inverse, des séparateurs tels que des espaces sont alors insérés par le dispositif de traduction lors de chaque changement de segment fonctionnel, pour reconstituer une instruction lisible à partir de la trame.

Abstraction faite des séparateurs et des préambules et codes de redondance cyclique, et d'un éventuel cryptage, la trame selon l'invention se déduit donc de l'instruction par simple application bijective entre caractères et/ou signes de l'instruction et octets codant ces caractères et/ou signes en valeurs binaires. Si l'interface homme-machine d'un dispositif de programmation utilise un clavier muni d'un codeur ASCII, les données issues du clavier forment directement le contenu de la trame.

La figure 13 représente un dispositif domotique de type émetteur d'ordres 13a, 14a, 15a ou de type récepteur d'ordres 11a, 12a munis de moyens d'analyse de trame aptes à appliquer le procédé de communication selon l'invention.

Un moyen d'analyse de trame 50 comprend un moyen de communication 51 sur le réseau domotique, tel un émetteur-récepteur radiofréquences apte à émettre et à recevoir des trames comprenant un champ de données. Le dispositif comprend une mémoire de trame 52, permettant de stocker au moins une trame, et une pluralité de tables.

Une première table 53 permet de stocker les codes particuliers de signes de séparation entre segments fonctionnels. Selon le mode de réalisation choisi, le signe de séparation peut être simplement le signe « espace » de code 20 Hex, ou encore peut être tout élément de l'ensemble des signes comme expliqué ci-dessus en relation avec la figure 12.

Quand le message est reçu, les signes de séparation contenus dans la trame sont détectés pour séparer les blocs fonctionnels. A cet effet, le dispositif comprend également un comparateur 54 apte à reconnaître dans le champ de donnée le signe de séparation et comprend une deuxième table de pointeurs 55 dans laquelle sont stockées les positions de début et/ou de fin des différents segments fonctionnels dans la mémoire de trame. Ainsi, le traitement des segments fonctionnels est ensuite réalisé par des moyens de traitement du dispositif, non représentés.

Quand un message issu d'un dispositif de traduction est émis, les signes d'espacement 20 Hex. sont retirés, avant émission de la trame telle que traduite à partir du langage de programmation s'il est convenu que les autres signes servent de séparateur, ces autres signes étant interdits à l'intérieur de mots contenant des chaînes alphanumériques.

Les différents éléments du dispositif sont des blocs fonctionnels dont certains peuvent être réalisés sous forme logicielle. Avantageusement, un même microcontrôleur contient tous les éléments du dispositif, ainsi que les moyens d'analyse et traitement.

Il n'est pas nécessaire que tous les récepteurs et émetteurs d'ordre de l'installation disposent du dispositif de traduction.

En effet, dans le cas ou le langage décrit dans la présente demande est utilisé à seule fin de programmation et de fonctionnement d'une installation, seuls les dispositifs domotiques disposant d'une interface homme-machine assez évoluée peuvent être équipés du dispositif de traduction. Celui-ci est donc utilisé pour traduire en trames les instructions lisibles fournies par l'installateur ou l'utilisateur ou pour traduire en langage lisible, à l'attention d'un installateur ou d'un utilisateur, les trames fournies par d'autres équipements de l'installation. Ce cas est représenté en figure 1. Tous les dispositifs domotiques sont néanmoins équipés d'un dispositif d'analyse de trame 50 permettant d'analyser une trame selon l'invention pour la traiter et exécuter l'instruction (de type simple ou de type multiple) qu'elle contient. Dans le cas où le langage décrit dans la présente demande est utilisé pour la mise en relation de différentes installations utilisant des protocoles différents, tous les dispositifs domotiques peuvent être équipés d'un dispositif de traduction. Alternativement, seules des passerelles en sont équipées. Ainsi la figure 14 représente un réseau d'installations domotiques. Outre l'installation domotique 1 de la figure 1, le réseau d'installations comprend trois autres installations domotiques 2 ou InstP1, 3 ou InstP2, 4 ou InstP3, dans lesquelles les équipement communiquent entre eux suivant respectivement un protocole P1, P2, P3. Chacune de ces autres installations est reliée à une passerelle de traduction des trames entre le protocole de l'installation et le protocole 10, dit aussi : « langage commun » CL. Une première passerelle 61 assure l'interface entre le langage du protocole P1 et le langage commun CL, une deuxième passerelle 62, l'interface entre P2 et CL et une troisième passerelle 63 entre P3 et CL.

Chaque passerelle comprend un dispositif d'analyse de la trame 50.

Pour programmer ou commander un équipement dans une des installations InstP1, InstP2, InstP3, l'installateur ou utilisateur dispose d'une interface Homme-Machine IHM 24, laquelle fonctionne conjointement avec le dispositif de traduction 20 décrit précédemment. Ainsi, l'installateur a la possibilité d'utiliser le langage de programmation très intuitif à base de signes et/ou de caractères alphanumériques lisibles, tout en communiquant (sous forme d'ordres ou d'informations) avec des équipements d'installations très diverses, via le langage commun dont les trames sont traduites à partir des instructions en langage de programmation. Par ailleurs, les émetteurs d'ordres ou récepteurs d'ordres d'autres équipements 11a, 12a, 13a, 14a peuvent également être intégrés dans ce réseau d'installations, ceux-ci communiquant directement avec le reste du réseau d'installation en utilisant le langage commun CL. Alternativement, le langage commun n'est utilisé que pour une communication entre l'interface Homme-Machine et les passerelles de communication, sans qu'aucun équipement ne soit directement commandé à l'aide du langage commun.

Le langage commun CL se caractérise donc par une syntaxe binaire permettant de construire une trame de communication de complexité totalement variable et reflétant fidèlement, segment par segment, une instruction ou un message dont la structure n'est pas définie a priori.

Cette trame peut directement être transmise sur le support physique après ajout d'octets de préambule ou de test de redondance cyclique (CRC). Elle peut aussi être transformée de manière plus ou moins complexe selon le protocole utilisé, et notamment par cryptage.

Ainsi que représenté schématiquement en figure 15A, les trames de communication du langage commun CL peuvent être appliquées ou reçues au niveau de la couche 7 « Application » du modèle de communication normalisé OSI, quand un premier protocole domotique 70 utilise l'ensemble des 7 couches. Au contenu de la trame de communication selon l'invention s'ajoutent alors de nombreuses informations du protocole 70, par exemple d'authentification ou de routage.

Inversement, comme représenté schématiquement en figure 15B, le langage commun CL peut s'appliquer directement à des couches beaucoup plus basses du modèle OSI, par exemple la couche 2 « Liaison » si un deuxième protocole domotique se satisfait de deux couches, la trame de communication selon l'invention étant alors simplement « encapsulée » par un préambule et un checksum.

Le langage commun peut également être désigné par le terme « Métalangage » du fait de son aptitude à permettre la communication entre réseaux ou entre équipements utilisant les protocoles domotiques les plus variés dans un bâtiment, par exemple « Ipv6 », « io-homecontrol* », « Zigbee* », « Z-wave* » etc. (* marques déposées).

La figure 15 décrit un procédé de substitution d'alias longs ou d'identifiants longs. Ce procédé est utilisé de manière automatique dans une installation évoluée, afin de remplacer des alias longs ou des identifiants longs par des alias courts. Des identifiants longs sont par exemple définis par l'installateur, au détriment de la longueur de trame qui en résultera lors de l'envoi d'un message.

Le procédé de substitution est avantageusement logé sous forme d'un programme de substitution dans un dispositif de surveillance réseau 40 placé dans le réseau domotique. Ce dispositif de surveillance est par exemple placé dans l'outil de programmation 15b. Il peut aussi s'agir d'un dispositif séparé.

Dans une première étape S1, le procédé provoque l'écoute permanente des messages sur le réseau.

Dans une deuxième étape S2, un message comportant un alias long ou un identifiant long est automatiquement repéré. Les acteurs concernés par le message sont enregistrés. Un identifiant est par exemple considéré comme long s'il dépasse 8 octets.

Dans une troisième étape S3, le procédé recherche un mot court disponible, c'est-à-dire non déjà utilisé. Le mot court est choisi arbitrairement dans une table ou par processus aléatoire. Le nouvel identifiant ou alias est aussi court que possible et ne présente aucune signification. Par exemple :

e2bXz ,

pour remplacer :

*TelecommandeChambre1erEtage* .

En utilisant les instructions d'affectation vues plus haut, le dispositif de surveillance réseau émet alors, dans une quatrième étape S4 un message vers les acteurs concernés afin que le nouvel alias ou identifiant soit substitué à l'alias long ou à l'identifiant long.

Dans une cinquième étape S5, l'alias ou identifiant généré automatiquement est mémorisé dans une table d'alias, associée à chaque dispositif de traduction. Lors d'une traduction inverse, tout alias ou identifiant généré automatiquement sera remplacé par l'alias ou l'identifiant d'origine.

Ainsi est résolu de manière progressive, automatique et totalement transparente pour l'installateur, le problème de la longueur des trames induit par une absence de contrainte sur la désignation d'identifiants ou d'alias par un installateur.

Ce procédé de substitution est ici décrit dans le cas d'alias longs ou d'identifiants longs. Il peut cependant et avantageusement s'appliquer également à la substitution d'autres chaînes de caractères de l'instruction.

Ainsi, dans le cas d'instructions fournies sous forme de pages de type XML contenant une succession de caractères ASCII, le procédé de substitution permet de compacter de manière très significative au moins une partie des contenus émis sur le réseau domotique et de réduire aussi bien le trafic radio que les temps de réaction des équipements lors de l'exécution de commandes.

L'invention est donc particulièrement adaptée à l'optimisation du fonctionnement d'un réseau domotique accessible sous forme de « web-services ».

Le procédé de substitution est implanté sous forme de programme de substitution dans un élément quelconque du réseau domotique, mais préférentiellement dans le dispositif de traduction 15b ou 40 ou dans une passerelle, par exemple la passerelle 61. Dans ce dernier cas, la quatrième étape du procédé de substitution peut être supprimée.

**Revendications**

1. Procédé de communication dans un réseau domotique permettant la communication entre acteurs constitués par des émetteurs d'ordres et/ou récepteurs d'ordres associés à des équipements dans un bâtiment au moyen de messages transmis sous forme de trames comprenant une pluralité de segments fonctionnels, **caractérisé en ce qu'**il comprend une étape de construction de la trame à partir d'une instruction écrite dans un langage de programmation, l'instruction comprenant des mots composés sous forme de chaînes de caractères alphanumériques et/ou signes, délimités par des séparateurs, dans laquelle chaque caractère alphanumérique et/ou signe de l'instruction est séparément converti en valeur binaire, la concaténation des valeurs binaires converties d'un mot formant un segment fonctionnel de la trame.

2. Procédé de communication selon la revendication 1, **caractérisé en ce qu'**il comprend une étape de construction d'une instruction à partir d'une trame dans laquelle des valeurs binaires successives de la trame sont converties en caractères alphanumériques et/ou signes, au cours de laquelle un séparateur peut-être inséré entre deux chaînes de caractères alphanumériques et/ou de signes.

3. Procédé de communication selon la revendication 1 ou 2, **caractérisé en ce qu'**une valeur binaire convertie est le code ASCII du caractère alphanumérique et/ou du signe.

4. Procédé de communication selon la revendication 1 ou 2, **caractérisé en ce que** lesdits séparateurs sont des espaces.

5. Procédé de communication selon l'une des revendications précédentes, **caractérisé en ce qu'**au moins un desdits segments fonctionnels est un segment fonctionnel particulier et **en ce que** ledit segment fonctionnel particulier spécifie un type d'échange ou un type d'action.

6. Procédé de communication selon la revendication 5, **caractérisé en ce que** ledit segment fonctionnel particulier est formé à partir d'une chaîne ne comprenant que des signes.

7. Procédé de communication selon la revendication 6, **caractérisé en ce qu'**un desdits signes présente une signification différente s'il spécifie un type d'échange ou s'il spécifie un type d'action.

8. Procédé de communication selon l'une des revendications 5 à 7, **caractérisé en ce qu'**un premier type d'échange est un échange de type descendant, si le message est transmis depuis un émetteur d'ordres vers un récepteur d'ordres, et **en ce qu'**un deuxième type d'échange est un échange de type montant si le message est transmis depuis un récepteur d'ordres vers un émetteur d'ordres.

9. Procédé de communication selon l'une des revendications 5 à 8, **caractérisé en ce qu'**un type d'échange inclut une demande d'acquittement ou une réponse à une demande d'acquittement.

10. Procédé de communication selon l'une des revendications 5 à 9, **caractérisé en ce que** les types d'action comprennent une action d'affectation et/ou une action de contrainte et/ou une action d'interrogation.

11. Procédé de communication selon l'une des revendications 5 à 10, **caractérisé en ce que**, dans une trame, lesdits segments fonctionnels particuliers portent sur un acteur et/ou sur un paramètre, notamment une position ou une vitesse de mouvement d'un équipement et/ou sur une condition logique, basée notamment sur une valeur mesurée d'un paramètre mesurable par un capteur, et/ou sur une valeur de paramètre, chacun étant affecté dans des segments fonctionnels distincts de ladite trame.

12. Dispositif de traduction pour la programmation d'une installation domotique, ladite installation comprenant des émetteurs d'ordres et/ou des récepteurs d'ordres associés à des équipements dans un bâtiment, lesdits émetteurs d'ordres et/ou récepteurs d'ordres communiquant entre eux par l'intermédiaire de trames comprenant un champ de données incluant plusieurs segments fonctionnels, **caractérisé en ce que** ledit dispositif comprend des moyens pour traduire en une trame une instruction écrite dans un langage de programmation comprenant des mots composés de chaînes de caractères alphanumériques et/ou signes, et **en ce que** ledit dispositif comprend également des moyens pour composer chaque segment fonctionnel à partir d'un mot par une traduction en binaire de chaque caractère alphanumérique et/ou signe du mot.

**13.** Dispositif domotique de type émetteur d'ordres et/ou récepteur d'ordres et/ou outil de programmation d'une installation domotique, comprenant des moyens d'analyse de trame (50) et des moyens de communication (51) aptes à émettre et à recevoir des trames, lesdites trames comprenant au moins un champ de données comprenant une pluralité de segments fonctionnels, **caractérisé en ce que** les moyens d'analyse de trame comprennent une mémoire de trame (52) permettant de stocker une trame, une pluralité de tables, un comparateur, (54) apte à reconnaître dans ledit champ de données un ou plusieurs signes de séparation, dont les codes sont stockés dans une première table (53), et comprennent une deuxième table de pointeurs (55) stockant la position desdits segments fonctionnels d'une trame stockée dans ladite mémoire de trames (52) à partir de la position desdits signes de séparation, afin de mettre en oeuvre le procédé de communication selon l'une des revendications 1 à 11.

**14.** Installation domotique comprenant au moins un dispositif de traduction selon la revendication 12 ou au moins un dispositif domotique selon la revendication 13.

**15.** Installation domotique selon la revendication 14, **caractérisée en ce qu'**elle comprend un dispositif de surveillance du réseau (40) muni d'un programme de substitution apte à provoquer le remplacement d'un identifiant long ou d'un alias long par un identifiant court ou un alias court, le dispositif de surveillance du réseau pouvant être compris dans le dispositif de traduction ou dans le dispositif domotique et en particulier dans une passerelle de communication comprenant un dispositif d'analyse de la trame (50).

**Claims**

**1.** Communication method in a home-automation network enabling communication between players consisting of command transmitters and/or command receivers associated with equipments in a building by means of messages transmitted in the form of frames comprising a plurality of functional segments, **characterized in that** it comprises a step for construction of the frame from an instruction written in a programming language, the instruction comprising words composed in the form of alphanumeric character strings and/or signs, delimited by separators, in which each alphanumeric character and/or sign of the instruction is separately converted into a binary value, the concatenation of the converted binary values of a word forming a functional segment of the frame.

**2.** Communication method according to Claim 1, **characterized in that** it comprises a step for construction of an instruction from a frame in which successive binary values of the frame are converted into alphanumeric characters and/or signs, during which a separator can be inserted between two alphanumeric character strings and/or signs.

**3.** Communication method according to Claim 1 or 2, **characterized in that** a converted binary value is the ASCII code of the alphanumeric character and/or of the sign.

**4.** Communication method according to Claim 1 or 2, **characterized in that** said separators are spaces.

**5.** Communication method according to one of the preceding claims, **characterized in that** at least one of said functional segments is a particular functional segment and **in that** said particular functional segment specifies a type of exchange or a type of action.

**6.** Communication method according to Claim 5, **characterized in that** said particular functional segment is formed from a string comprising only signs.

**7.** Communication method according to Claim 6, **characterized in that** one of said signs has a different meaning if it specifies a type of exchange or if it specifies a type of action.

**8.** Communication method according to one of Claims 5 to 7, **characterized in that** a first type of exchange is an exchange of downlink type, if the message is transmitted from a command transmitter to a command receiver, and **in that** a second type of exchange is an exchange of uplink type if the message is transmitted from a command receiver to a command transmitter.

**9.** Communication method according to one of Claims 5 to 8, **characterized in that** a type of exchange includes an acknowledgement request or a response to an acknowledgement request.

**10.** Communication method according to one of Claims 5 to 9, **characterized in that** the types of action comprise an assignment action and/or a constraint action and/or an interrogation action.

11. Communication method according to one of Claims 5 to 10, **characterized in that**, in a frame, said particular functional segments relate to a player and/or to a parameter, in particular a position or a speed of movement of an equipment item and/or to a logic condition, based in particular on a measured value of a parameter that can be measured by a sensor, and/or on a parameter value, each being assigned in distinct functional segments of said frame.

12. Translation device for programming a home-automation installation, said installation comprising command transmitters and/or command receivers associated with equipments in a building, said command transmitters and/or command receivers communicating with one another via frames comprising a data field including a number of functional segments, **characterized in that** said device comprises means for translating into a frame an instruction written in a programming language comprising words composed of alphanumeric character strings and/or signs, and **in that** said device also comprises means for composing each functional segment from a word by a binary translation of each alphanumeric character and/or sign of the word.

13. Home-automation device of command transmitter and/or command receiver type and/or programming tool for a home-automation installation, comprising frame analysis means (50) and communication means (51) suitable for transmitting and receiving frames, said frames comprising at least one data field comprising a plurality of functional segments, **characterized in that** the frame analysis means comprise a frame memory (52) for storing a frame, a plurality of tables, a comparator (54) suitable for recognizing in said data field one or more separation signs, the codes of which are stored in a first table (53), and comprise a second table of pointers (55) storing the position of said functional segments of a frame stored in said frame memory (52) from the position of said separation signs, in order to implement the communication method according to one of Claims 1 to 11.

14. Home-automation installation comprising at least one translation device according to Claim 12 or at least one home-automation device according to Claim 13.

15. Home-automation installation according to Claim 14, **characterized in that** it comprises a network monitoring device (40) provided with a substitution program suitable for causing a long identifier or a long alias to be replaced with a short identifier or a short alias, the network monitoring device being able to be included in the translation device or in the home-automation device and in particular in a communication gateway comprising a frame analysis device (50).

**Patentansprüche**

1. Kommunikationsverfahren in einem Domotiknetz, das die Kommunikation zwischen aus Befehlssendern und/oder Befehlsempfängern bestehenden Aktoren, die Geräten in einem Gebäude zugeordnet sind, mit Hilfe von Mitteilungen erlaubt, die in Form von Rahmen übertragen werden, welche eine Vielzahl von Funktionssegmenten enthalten, **dadurch gekennzeichnet, dass** es einen Schritt des Aufbaus des Rahmens ausgehend von einer in einer Programmiersprache geschriebenen Anweisung enthält, wobei die Anweisung Wörter enthält, die in Form von Ketten von alphanumerischen Schriftzeichen und/oder Zeichen zusammengesetzt sind, begrenzt durch Trennzeichen, bei dem jedes alphanumerische Schriftzeichen und/oder Zeichen der Anweisung getrennt in einen Binärwert umgewandelt wird, wobei die Verknüpfung der umgewandelten Binärwerte eines Worts ein Funktionssegment des Rahmens bildet.

2. Kommunikationsverfahren nach Anspruch 1, **dadurch gekennzeichnet, dass** es einen Schritt des Aufbaus einer Anweisung ausgehend von einem Rahmen enthält, in dem aufeinanderfolgende Binärwerte des Rahmens in alphanumerische Schriftzeichen und/oder Zeichen umgewandelt werden, während dem ein Trennzeichen zwischen zwei Ketten von alphanumerischen Schriftzeichen und/oder Zeichen eingefügt werden kann.

3. Kommunikationsverfahren nach Anspruch 1 oder 2, **dadurch gekennzeichnet, dass** ein umgewandelter Binärwert der ASCII-Code des alphanumerischen Schriftzeichens und/oder des Zeichens ist.

4. Kommunikationsverfahren nach Anspruch 1 oder 2, **dadurch gekennzeichnet, dass** die Trennzeichen Leerzeichen sind.

5. Kommunikationsverfahren nach einem der vorhergehenden Ansprüche, **dadurch gekennzeichnet, dass** mindestens eines der Funktionssegmente ein bestimmtes Funktionssegment ist, und dass das bestimmte Funktionssegment einen Austauschtyp oder einen Aktionstyp spezifiziert.

6. Kommunikationsverfahren nach Anspruch 5, **dadurch gekennzeichnet, dass** das bestimmte Funktionssegment ausgehend von einer Kette geformt wird, die nur Zeichen enthält.

7. Kommunikationsverfahren nach Anspruch 6, **dadurch gekennzeichnet, dass** eines der Zeichen eine andere Bedeutung aufweist, wenn es einen Austauschtyp spezifiziert oder wenn es einen Aktionstyp spezifiziert.

8. Kommunikationsverfahren nach einem der Ansprüche 5 bis 7, **dadurch gekennzeichnet, dass** ein erster Austauschtyp ein Austausch vom Abwärtstyp ist, wenn die Mitteilung von einem Befehlssender an einen Befehlsempfänger übertragen wird, und dass ein zweiter Austauschtyp ein Austausch vom Aufwärtstyp ist, wenn die Mitteilung von einem Befehlsempfänger zu einem Befehlssender übertragen wird.

9. Kommunikationsverfahren nach einem der Ansprüche 5 bis 8, **dadurch gekennzeichnet, dass** ein Austauschtyp eine Bestätigungsanforderung oder eine Antwort auf eine Bestätigungsanforderung umfasst.

10. Kommunikationsverfahren nach einem der Ansprüche 5 bis 9, **dadurch gekennzeichnet, dass** die Aktionstypen eine Zuweisungsaktion und/oder eine Einschränkungsaktion und/oder eine Abfrageaktion enthalten.

11. Kommunikationsverfahren nach einem der Ansprüche 5 bis 10, **dadurch gekennzeichnet, dass** in einem Rahmen die bestimmten Funktionssegmente sich auf einen Aktor und/oder auf einen Parameter, insbesondere eine Position oder eine Bewegungsgeschwindigkeit eines Geräts, und/oder auf eine logische Bedingung, basierend insbesondere auf einem gemessenen Wert eines messbaren Parameters von einem Sensor, und/oder auf einen Parameterwert beziehen, wobei jeder in unterschiedlichen Funktionssegmenten des Rahmens zugewiesen wird.

12. Umsetzungsvorrichtung für die Programmierung einer Domotikanlage, wobei die Anlage Befehlssender und/oder Befehlsempfänger enthält, die Geräten in einem Gebäude zugeordnet sind, wobei die Befehlssender und/oder Befehlsempfänger miteinander über Rahmen kommunizieren, die ein Datenfeld enthalten, das mehrere Funktionssegmente umfasst, **dadurch gekennzeichnet, dass** die Vorrichtung Einrichtungen enthält, um in einem Rahmen eine in einer Programmiersprache geschriebene Anweisung umzusetzen, die Wörter enthält, die aus Ketten von alphanumerischen Schriftzeichen und/oder Zeichen zusammengesetzt sind, und dass die Vorrichtung ebenfalls Einrichtungen enthält, um jedes Funktionssegment ausgehend von einem Wort durch eine Binärumsetzung jedes alphanumerischen Schriftzeichens und/oder Zeichens des Worts zusammenzusetzen.

13. Domotikvorrichtung vom Typ Befehlssender und/oder Befehlsempfänger und/oder Programmierwerkzeug einer Domotikanlage, die Einrichtungen zur Rahmenanalyse (50) und Kommunikationseinrichtungen (51) enthält, die Rahmen senden und empfangen können, wobei die Rahmen mindestens ein Datenfeld enthalten, das eine Vielzahl von Funktionssegmenten enthält, **dadurch gekennzeichnet, dass** die Rahmenanalyseeinrichtungen einen Rahmenspeicher (52), der es ermöglicht, einen Rahmen zu speichern, eine Vielzahl von Tabellen und einen Komparator (54) enthalten, der im Datenfeld ein oder mehrere Trennzeichen erkennen kann, deren Codes in einer ersten Tabelle (53) gespeichert sind, und eine zweite Tabelle von Zeigern (55) enthalten, die die Position der Funktionssegmente eines Rahmens, der in dem Rahmenspeicher (52) gespeichert ist, ausgehend von der Position der Trennzeichen speichert, um das Kommunikationsverfahren nach einem der Ansprüche 1 bis 11 anzuwenden.

14. Domotikanlage, die mindestens eine Umsetzungsvorrichtung nach Anspruch 12 oder mindestens eine Domotikvorrichtung nach Anspruch 13 enthält.

15. Domotikanlage nach Anspruch 14, **dadurch gekennzeichnet, dass** sie eine Netzüberwachungsvorrichtung (40) enthält, die mit einem Ersatzprogramm versehen ist, das den Austausch einer langen Kennung oder eines langen Alias durch eine kurze Kennung oder ein kurzes Alias bewirken kann, wobei die Netzüberwachungsvorrichtung in der Umsetzungsvorrichtung oder in der Domotikvorrichtung und insbesondere in einem Kommunikations-Gateway enthalten sein kann, das eine Analysevorrichtung des Rahmens (50) enthält.

Fig. 1

Fig. 2

| Message en langage programme | Convertisseur ASCII | Trame de communication |

Fig. 3

| Acteur 1 | Type Echange | Acteur 2 | Type Action | Paramètre | Valeur de Paramètre |
|---|---|---|---|---|---|

Fig. 4

| Message Descendant | | Message Montant | |
|---|---|---|---|
| Acteur 1 | Emetteur d'ordres | Acteur 1 | Récepteur d'ordres |
| Acteur 2 | Récepteur d'ordres | Acteur 2 | Emetteur d'ordres |
| Signe | >> | Signe | << |

## Fig. 5

| Signe | *Type Echange* ou Type Action |
|---|---|
| = | *Acquittement*, Affectation ("fais"), Egalité |
| ? | Questionnement, Demande de retour |
| # | *Non-acquittement*, Négation ("ne fais pas") |
| & | *Avec demande d'acquittement* |
| > | Reste supérieur à, Si supérieur à |
| < | Reste inférieur à, Si inférieur à |
| + | *Avec demande d'insertion*, Ajout, Addition |
| - | *Avec demande de suppression*, Soustraction |
| ( ) | Valeur ou condition logique ou destinataire |
| sp | *Séparateur Segment*, Séparateur Segment |

100a

Télécommande   >>   Store1  =  Position   (50)

110a     120a   130a   140a  150a    160a

**Fig. 6**

100b

Télécommande   >>   Store1  ?  Position

110b     120b   130b   140b  150b    160b

**Fig. 7**

120c-e

| Télécommande | >>& | Store1  =  Position   (50) |
| Télécommande | <<= | Store1 |
| Télécommande | <<# | Store1 |

100c
100d
100e

**Fig. 8**

100f

Contrôleur4   <<+   Store1  =  Profil   (Store)

110f     120f   130f   140f  150f    160f

**Fig. 9**

## Fig. 10

CapteurVent  >>  Store1 + Store2  =  Position (0)  +  Vitesse (100)

110g  120g  130g  140g  130'g  140'g    150g  160f  140''g  150'g  160'g

100g

## Fig. 11

Store1  <<+    AlerteVent = Position (0) + Vitesse (100)    S11

Store2  <<+    AlerteVent = Position (0) + Vitesse (100)    S12

EVB1  <<+    AlerteVent = Orientation (50)    S13

CapteurVent  <<+    GroupeAlerteVent = Store1 + Store2 + EVB1    S21

CapteurVent <<+ AlerteVent = Vent  (>120)    S22

CapteurVent << AlerteVent (GroupeAlerteVent)    S23

CapteurVent  >>  Store1 + Store2 + EVB1  =  AlerteVent    S30

## Fig. 12

54 1f 6c 1f 63 6f 6d 6d 61 6e 64 65 20 3e 3e 20 53 74 6f 72 65 31 20 3f 20 50 6f 73 69 74 69 6f 6e

100h

## Fig. 13

52

50

51

53

54    55

11a, 12a, 13a,
14a, 15a

# Fig. 14

# Fig. 15

| |
|---|
| Ecouter le trafic réseau — S1 |
| Détecter dans une trame un alias ou identifant long — S2 |
| Choisir un mot court disponible — S3 |
| Emettre une instruction d'affectation de nouvel alias ou identifiant utilisant le mot court — S4 |
| Stocker l'alias ou identifant long d'origine et celui de remplacement dans une table de correspondance — S5 |

Fig. 15A

| CL |
| --- |
| 7 |
| 6 |
| 5 |
| 4 |
| 3 |
| 2 |
| 1 |

~ 70

Fig. 15B

| CL |
| --- |
| 2 |
| 1 |

~ 80

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0178307 A
- US 7304950 B